# EUROPÄISCHE PATENTSCHRIFT

(11) **EP 3 096 085 B1**
(45) Veröffentlichungstag und Bekanntmachung des Hinweises auf die Patenterteilung: **10.07.2019**
(21) Anmeldenummer: 16167939.4
(22) Anmeldetag: 02.05.2016
(51) Int. Cl.: F24C 3/12, G05G 1/12

(54) **Haushaltgeräte-Bedienanordnung, Gasventil und Gaskochstelle**
Household device control assembly, gas valve and cooker
Système d'utilisation d'un appareil ménager, vanne de gaz et poste de cuisson

(30) Priorität: 22.05.2015 ES 201530706
(43) Veröffentlichungstag der Anmeldung: 23.11.2016
(73) Patentinhaber: BSH Hausgeräte GmbH, 81739 München (DE)
(72) Erfinder: Palacios Valdueza, Luis Antonio, 39610 Astillero (ES); Placer Maruri, Emilio, 39120 Liencres (ES); Saiz Gonzalez, Roberto, 39539 Villapresente, Cantabria (ES)

(56) Entgegenhaltungen:
- EP-A2- 2 620 831
- US-A- 2 291 560
- US-A- 2 745 689
- US-A- 4 923 325

## Beschreibung

Die vorliegende Erfindung betrifft eine Haushaltsgeräte-Bedienanordnung, ein Gasventil und eine Gaskochstelle.

Eine Gaskochstelle kann ein Gasventil aufweisen, das mit Hilfe eines Betätigungsschafts betätigbar ist. An dem Betätigungsschaft kann ein Betätigungsknauf vorgesehen sein. Der Betätigungsknauf kann auf den Betätigungsschaft aufgesteckt sein. Es ist wünschenswert, bei der Montage des Betätigungsknaufs an dem Betätigungsschaft eine möglichst geringe Kraft auf diesen aufzubringen, um eine Beschädigung des Gasventils zu vermeiden. Ferner ist es gleichzeitig wünschenswert, eine möglichst hohe Abzugskraft des Betätigungsknaufs von dem Betätigungsschaft zu erreichen, um zu verhindern, dass ein Benutzer den Betätigungsknauf ungewollt oder gewollt von dem Betätigungsschaft abzieht.

Die US 4,923,325 A beschreibt eine Bedienanordnung mit einem Betätigungsschaft, einem Bedienknauf und einem Befestigungselement zum Befestigen des Bedienknaufs an dem Betätigungsschaft. Das Befestigungselement ist einteilig mit dem Bedienknauf ausgebildet. Zwischen dem Befestigungselement und dem Betätigungsschaft besteht eine reibschlüssige Verbindung.

Die US 2,291,560 A zeigt eine Bedienanordnung mit einem Betätigungsschaft, einem Bedienknauf und einem blattfederförmigen Befestigungselement zum Befestigen des Bedienknaufs an dem Betätigungsschaft. Das Befestigungselement ist als von dem Bedienknauf getrenntes Bauteil ausgebildet. Zwischen dem Befestigungselement und dem Betätigungsschaft besteht eine reibschlüssige Verbindung.

Die US 2,745,689 A beschreibt eine Bedienanordnung mit einem Betätigungsschaft, einem Bedienknauf und einem hülsenförmigen Befestigungselement zum Befestigen des Bedienknaufs an dem Betätigungsschaft. Das Befestigungselement ist als von dem Bedienknauf getrenntes Bauteil ausgebildet. Zwischen dem Befestigungselement und dem Betätigungsschaft besteht eine reibschlüssige Verbindung.

Vor diesem Hintergrund besteht eine Aufgabe der vorliegenden Erfindung darin, eine verbesserte Haushaltsgeräte-Bedienanordnung zur Verfügung zu stellen.

Demgemäß wird eine Haushaltsgeräte-Bedienanordnung mit einem Betätigungsschaft, einem verdrehfest an dem Betätigungsschaft angeordneten Bedienknauf, der ein Befestigungselement zum Befestigen des Bedienknaufs an dem Betätigungsschaft aufweist, vorgeschlagen. Das Befestigungselement ist dazu eingerichtet, eine reibschlüssige Verbindung mit dem Betätigungsschaft herzustellen, so dass eine Aufdrückkraft beim Aufdrücken des Bedienknaufs auf den Betätigungsschaft in Axialrichtung desselben geringer als eine Abzugskraft beim Abziehen des Bedienknaufs von dem Betätigungsschaft entgegen der Axialrichtung desselben ist, wobei das Befestigungselement kammförmig ist und Zähne aufweist, die in Richtung auf eine seitliche Abflachung des Betätigungsschafts hin orientiert sind, um das Befestigungselement an der seitlichen Abflachung zu verhaken, und wobei in dem Befestigungselement eine seitliche Bohrung vorgesehen ist, in die zum Demontieren des Bedienknaufs ein Werkzeug einführbar ist, um das Befestigungselement von der seitlichen Abflachung wegzudrücken, wodurch der Bedienknauf von dem Betätigungsschaft abziehbar ist.

Ein Entfernen des Bedienknaufs von dem Betätigungsschaft wird hierdurch verhindert oder zumindest erschwert. Vorzugsweise ist die Abzugskraft um einen definierten Faktor größer als die Aufdrückkraft. Bevorzugt ist die Abzugskraft größer als 40 N, weiter bevorzugt größer als 50 N, weiter bevorzugt größer als 60 N. Die Aufdrückkraft ist vorzugsweise kleiner als 40 N, weiter bevorzugt kleiner als 30 N, weiter bevorzugt kleiner als 20 N. Der vorbestimmte Faktor kann 0,8, bevorzugt 0,7, weiter bevorzugt 0,6, weiter bevorzugt 0,5 und weiter bevorzugt 0,4 betragen. Der Bedienknauf kann mehrteilig ausgebildet sein. Der Bedienknauf kann einen Betätigungsabschnitt, einen an dem Betätigungsabschnitt befestigten Aufnahmeabschnitt, einen zwischen dem Betätigungsabschnitt und dem Aufnahmeabschnitt angeordneten Zwischenring und ein Dichtelement aufweisen, das zwischen dem Aufnahmeabschnitt und einer Kochfeldplatte der Gaskochstelle angeordnet ist.

Gemäß einer Ausführungsform ist der Bedienknauf aus einem Kunststoffmaterial gefertigt.

Beispielsweise kann der Bedienknauf aus Acrylnitril-Butadien-Styrol (ABS) gefertigt sein. Insbesondere ist der Bedienknauf ein Kunststoffspritzgussbauteil. Hierdurch kann der Bedienknauf kostengünstig in großen Stückzahlen hergestellt werden.

Gemäß einer weiteren Ausführungsform sind der Bedienknauf und das Befestigungselement einstückig.

Hierdurch können der Bedienknauf und das Befestigungselement besonders kostengünstig hergestellt werden. Insbesondere sind der Bedienknauf und das Befestigungselement materialeinstückig ausgebildet.

Gemäß einer weiteren Ausführungsform sind der Bedienknauf und das Befestigungselement getrennte Bauteile.

Das Befestigungselement kann mit dem Bedienknauf beispielsweise verclipst, verschnappt, verschraubt oder vernietet sein. Weiterhin kann das Befestigungselement mit dem Bedienknauf verklebt sein.

Gemäß einer weiteren Ausführungsform ist das Befestigungselement aus einem Metallwerkstoff gefertigt.

Insbesondere kann das Befestigungselement aus einem Stahlwerkstoff gefertigt sein. Vorzugsweise weist das Material des Befestigungselements eine höhere Härte auf als das Material des Betätigungsschafts.

Das Befestigungselement ist kammförmig.

Mit Hilfe der kammförmigen Ausgestaltung wird erreicht, dass das Befestigungselement an mehreren punkt- oder linienförmigen Bereichen an dem Betätigungsschaft aufliegt.

Das Befestigungselement ist dazu eingerichtet, sich in einer seitlichen Abflachung des Befestigungsschafts zu verhaken.

Die seitliche Abflachung des Betätigungsschafts kann eine hohe Oberflächenrauheit aufweisen. Vorzugsweise ist das Befestigungselement dazu eingerichtet, die Oberfläche, insbesondere mikroskopisch, plastisch zu verformen. Hierdurch wird eine besonders gute Verbindung des Befestigungselements mit der seitlichen Abflachung gewährleistet.

Das Befestigungselement weist Zähne auf, die in Richtung auf die seitliche Abflachung des Betätigungsschafts hin orientiert sind.

Beispielsweise kann das Befestigungselement drei oder vier Zähne aufweisen. Dadurch, dass das Befestigungselement Zähne aufweist, ist eine besonders gute Verhakung mit der Oberfläche der seitlichen Abflachung des Betätigungsschafts möglich. Die Zähne sind vorzugsweise scharfkantig.

Weiterhin wird ein Gasventil mit einer derartigen Haushaltsgeräte-Bedienanordnung vorgeschlagen.

Das Gasventil umfasst den Betätigungsschaft. Das Gasventil ist vorzugsweise ein gestuftes Gasventil oder sogenanntes Step Valve.

Weiterhin wird eine Gaskochstelle mit einer derartigen Haushaltsgeräte-Bedienanordnung und/oder einem derartigen Gasventil vorgeschlagen.

Die Gaskochstelle ist ein Haushaltsgerät oder Teil eines Haushaltsgeräts.

Weitere mögliche Implementierungen der Haushaltsgeräte-Bedienanordnung, des Gasventils und/oder der Gaskochstelle umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Haushaltsgeräte-Bedienanordnung, des Gasventils und/oder der Gaskochstelle hinzufügen.

Weitere vorteilhafte Ausgestaltungen und Aspekte der Haushaltsgeräte-Bedienanordnung, des Gasventils und/oder der Gaskochstelle sind Gegenstand der Unteransprüche sowie der im Folgenden beschriebenen Ausführungsbeispiele der Haushaltsgeräte-Bedienanordnung, des Gasventils und/oder der Gaskochstelle. Im Weiteren werden die Haushaltsgeräte-Bedienanordnung, das Gasventil und/oder die Gaskochstelle anhand von bevorzugten Ausführungsformen unter Bezugnahme auf die beigelegten Figuren näher erläutert.
- Fig. 1: zeigt eine schematische perspektivische Ansicht einer Ausführungsform einer Gaskochstelle;
- Fig. 2: zeigt eine schematische seitliche Ansicht einer Ausführungsform einer Haushaltsgeräte-Bedienanordnung für die Gaskochstelle gemäß Fig. 1;
- Fig. 3: zeigt eine schematische Schnittansicht der Haushaltsgeräte-Bedienanordnung gemäß Fig. 2;
- Fig. 4: zeigt eine schematische perspektivische Explosionsansicht eines Bedienknaufs für die Haushaltsgeräte-Bedienanordnung gemäß Fig. 2;
- Fig. 5: zeigt eine schematische perspektivische Ansicht einer Ausführungsform eines Aufnahmeabschnitts für den Bedienknauf gemäß Fig. 4;
- Fig. 6: zeigt eine weitere schematische perspektivische Ansicht des Aufnahmeabschnitts gemäß Fig. 5;
- Fig. 7: zeigt eine schematische Seitenansicht des Aufnahmeabschnitts gemäß Fig. 5;
- Fig. 8: zeigt eine schematische Seitenansicht der Haushaltsgeräte-Bedienanordnung gemäß Fig. 2; und
- Fig. 9: zeigt eine schematische Schnittansicht der Haushaltsgeräte-Bedienanordnung gemäß Fig. 2.

In den Figuren sind gleiche oder funktionsgleiche Elemente mit denselben Bezugszeichen versehen worden, sofern nichts anderes angegeben ist.

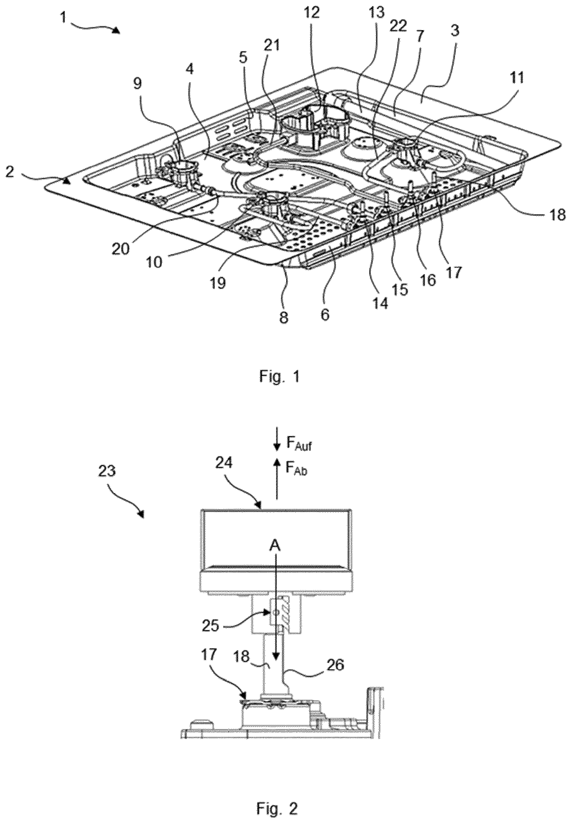

Die Fig. 1 zeigt eine schematische perspektivische Ansicht einer Gaskochstelle 1. Die Gaskochstelle 1 ist insbesondere ein Haushaltsgerät oder Teil eines Haushaltsgeräts wie beispielsweise Teil eines Gasherds. Die Gaskochstelle 1 umfasst eine Kochmuldenwanne 2. Die Kochmuldenwanne 2 ist vorzugsweise aus einem Stahlblech gefertigt. Die Kochmuldenwanne 2 weist vorzugsweise einen zumindest abschnittsweise die Kochmuldenwanne 2 umlaufenden Auflageflansch 3 auf. Weiterhin umfasst die Kochmuldenwanne 2 einen Boden 4, eine Rückwand 5, eine der Rückwand 5 gegenüberliegend angeordnete Vorderwand 6 und zwei einander gegenüberliegend angeordnete Seitenwände 7, 8 auf. Die Gaskochstelle 1 umfasst weiterhin mehrere Gasbrenner 9 bis 12. Die Anzahl der Gasbrenner 9 bis 12 ist beliebig. In der Fig. 1 sind lediglich Brennerunterteile der Gasbrenner 9 bis 12 gezeigt. Die Gasbrenner 9 bis 12 sind innerhalb der Kochmuldenwanne 2 positioniert.

Die Gaskochstelle 1 umfasst weiterhin eine Hauptgasleitung 13, an der mehrere Gasventile 14 bis 17 angeschlossen sind. Die Anzahl der Gasventile 14 bis 17 entspricht vorzugsweise der Anzahl der Gasbrenner 9 bis 12. Die Gasventile 14 bis 17 sind dazu eingerichtet, einen jeweiligen Gasvolumenstrom zu den ihnen zugeordneten Gasbrennern 9 bis 12 einzustellen. Die Gasventile 14 bis 17 können als sogenannte gestufte Gasventile oder Step Valves ausgebildet sein. Jedes Gasventil 14 bis 17 weist einen drehbaren Betätigungsschaft 18 auf. Die Gasventile 14 bis 17 sind mit Hilfe von Gasleitungen 19 bis 22 mit den ihnen zugeordneten Gasbrennern 9 bis 12 fluidisch verbunden.

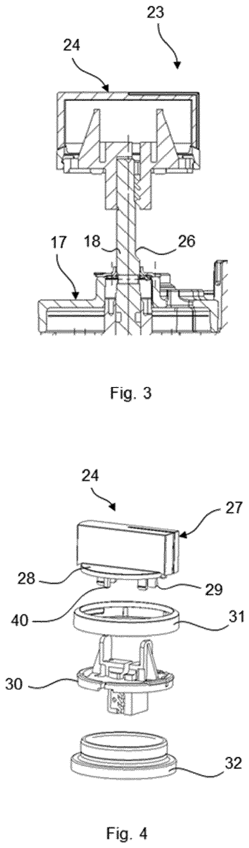

Die Fig. 2 zeigt eine schematische Seitenansicht einer Ausführungsform einer Haushaltsgeräte-Bedienanordnung 23 für die Gaskochstelle 1. Die Fig. 3 zeigt eine schematische Schnittansicht der Haushaltsgeräte-Bedienanordnung 23. Im Folgenden wird auf die Fig. 2 und 3 gleichzeitig Bezug genommen.

Die Haushaltsgeräte-Bedienanordnung 23 umfasst den Betätigungsschaft 18 eines Gasventils 17 und einen verdrehfest an dem Betätigungsschaft 18 angeordneten Bedienknauf 24. Der Bedienknauf 24 umfasst ein Befestigungselement 25 zum Befestigen des Bedienknaufs 24 an dem Betätigungsschaft 18. Das Befestigungselement 25 ist dazu eingerichtet, eine reibschlüssige Verbindung mit dem Betätigungsschaft 18 herzustellen, so dass eine Aufdrückkraft F_{Auf} beim Aufdrücken des Bedienknaufs 24 auf den Betätigungsschaft 18 in Axialrichtung A desselben desselben geringer als eine Abzugskraft F_{Ab} beim Abziehen des Bedienknaufs 24 von dem Betätigungsschaft 18 entgegen der Axialrichtung A ist. Der Betätigungsschaft 18 weist vorzugsweise eine seitliche Abflachung 26 auf. Die Fig. 2 und 3 zeigen den Bedienknauf 24 in einem auf den Betätigungsschaft 18 aufgesteckten Zustand.

Die Fig. 4 zeigt den Bedienknauf 24 in einer schematischen perspektivischen Explosionsansicht. Der Bedienknauf 24 weist einen Betätigungsabschnitt 27 auf. Der Betätigungsabschnitt 27 weist zwei seitliche Abflachungen auf, an denen er von einem Benutzer gegriffen werden kann. Der Betätigungsabschnitt 27 weist ferner einen Basisabschnitt 28 auf, der kreisförmig ausgebildet sein kann. Unterseitig aus dem Basisabschnitt 28 erstrecken sich Rasthaken 29 zum Verrasten des Betätigungsabschnitts 27 mit einem Aufnahmeabschnitt 30 des Bedienknaufs 24 heraus.

Zwischen dem Aufnahmeabschnitt 30 und dem Betätigungsabschnitt 27 ist ein Zwischenring 31 positioniert. Unterhalb des Aufnahmeabschnitts 30 ist ein Dichtelement 32 vorgesehen. Das Dichtelement 32 kann insbesondere zwischen einer Kochfeldplatte der Gaskochstelle 1 und dem Aufnahmeabschnitt 30 vorgesehen sein. Das Dichtelement 32 kann aus einem Kunststoffmaterial gefertigt sein. Insbesondere kann das Dichtelement 32 federelastisch verformbar sein.

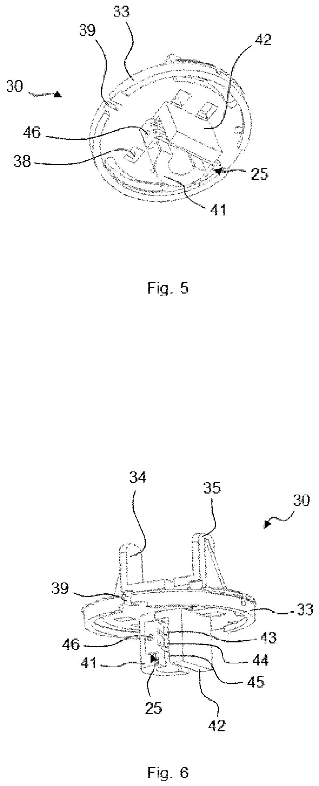

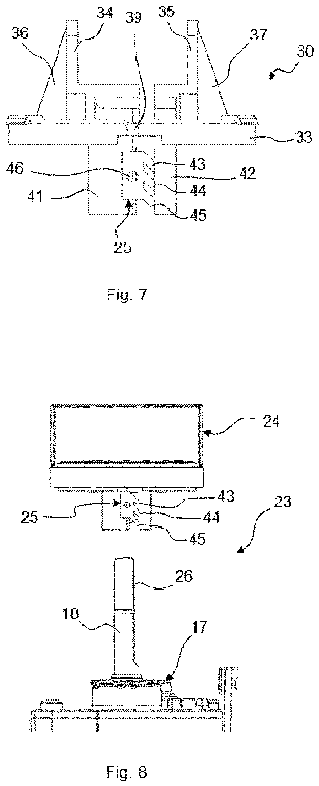

Die Fig. 5 und 6 zeigen den Aufnahmeabschnitt 30 jeweils in einer schematischen perspektivischen Darstellung. Die Fig. 7 zeigt den Aufnahmeabschnitt 30 in einer schematischen Seitenansicht. Im Folgenden wird auf die Fig. 5 bis 7 gleichzeitig Bezug genommen.

Der Aufnahmeabschnitt 30 weist einen tellerförmigen Grundkörper 33 auf, aus dem sich oberseitig zwei Betätigungselemente 34, 35 herauserstrecken. Die Betätigungselemente 34, 35 können mit Rippen 36, 37 verstärkt sein. Die Betätigungselemente 34, 35 greifen in den Betätigungsabschnitt 27 formschlüssig ein. An dem Grundkörper 33 sind weiterhin Durchbrüche 38 für die Rasthaken 29 des Betätigungsabschnitts 27 vorgesehen.

Weiterhin ist umfänglich an dem Grundkörper 33 eine Positioniernut 39 vorgesehen, in die ein Positionierelement 40 (Fig. 4) des Betätigungsabschnitts 27 formschlüssig eingreift.

Aus einer den Betätigungselementen 34, 35 abgewandten Unterseite des Grundkörpers 33 erstrecken sich ein erster Aufnahmebereich 41 und ein zweiter Aufnahmebereich 42 heraus. Zwischen den Aufnahmebereichen 41, 42 ist der Betätigungsschaft 18 aufnehmbar. Der erste Aufnahmebereich 41 weist vorzugsweise eine rohrförmige Geometrie auf, die in ihrer Längsrichtung mittig geteilt ist. Der zweite Aufnahmebereich 42 ist platten- oder quaderförmig.

Der Aufnahmeabschnitt 30 weist ferner das Befestigungselement 25 auf. Das Befestigungselement 25 ist zwischen dem ersten Aufnahmebereich 41 und dem zweiten Aufnahmebereich 42 angeordnet. Das Befestigungselement 25 kann materialeinstückig mit dem Aufnahmeabschnitt 30, insbesondere mit einem der Aufnahmebereiche 41, 42, ausgebildet sein. Vorzugsweise sind das Befestigungselement 25 und der Aufnahmeabschnitt 30 aus einem Kunststoffmaterial gefertigt. Beispielsweise ist der Aufnahmeabschnitt 30 ein Kunststoffspritzgussbauteil. Alternativ kann das Befestigungselement 25 aus einem anderen Material als der Aufnahmeabschnitt 30 ausgebildet sein. Beispielsweise kann das Befestigungselement 25 aus einem Metallwerkstoff ausgebildet sein.

Das Befestigungselement 25 ist insbesondere kammförmig ausgebildet und weist Zähne 43 bis 45 auf. Beispielsweise können drei Zähne 43 bis 45 vorgesehen sein. Die Anzahl der Zähne 43 bis 45 ist beliebig. Die scharfkantigen Zähne 43 bis 45 weisen in Richtung auf die seitliche Abflachung 26 des Betätigungsschafts 18 hin. Insbesondere sind die Zähne 43 bis 45 dazu eingerichtet, sich an einer Oberfläche der seitlichen Abflachung 26 zu verhaken. Insbesondere können die Zähne 43 bis 45 dazu eingerichtet sein, die Oberfläche der Abflachung 26 des Betätigungsschafts 18 plastisch zu verformen. Hierdurch wird eine besonders gute Verhakung der Zähne 43 bis 45 in der Oberfläche der seitlichen Abflachung 26 erreicht. In dem Befestigungselement 25 kann eine seitliche Bohrung 46 vorgesehen sein. Zum Demontieren des Bedienknaufs 24 kann ein Werkzeug in die Bohrung 46 eingeführt werden und das kammförmige Befestigungselement 25 von der Oberfläche der seitlichen Abflachung 26 des Betätigungsschafts 18 weggedrückt werden. Hierdurch kann der Bedienknauf 24 von dem Betätigungsschaft 18 abgezogen werden.

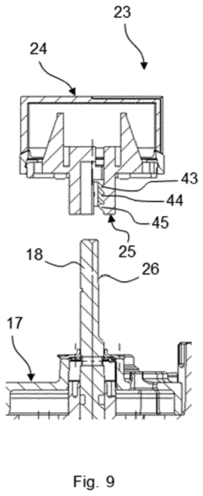

Die Fig. 8 und 9 zeigen in einer Seitenansicht und in einer Schnittansicht den Bedienknauf 24 in einem von dem Betätigungsschaft 18 abgezogenen Zustand.

Dadurch, dass die Abzugskraft F_{Ab} höher ist als die Aufdrückkraft F_{Auf} ist ein versehentliches oder gewolltes Abziehen des Bedienknaufs 24 von dem Betätigungsschaft 18 nicht möglich oder zumindest erschwert. Hierdurch werden die an die Gaskochstelle 1 gestellten Sicherheitsanforderungen erfüllt. Mit Hilfe des Dichtelements 32 ist eine zuverlässige Abdichtung der Haushaltsgeräte-Bedienanordnung 23 gewährleistet. Der Bedienknauf 24 kann ohne Zusatzteile und ohne Werkzeug montiert werden. Das Design des Bedienknaufs 24 ist beliebig wählbar.

### Verwendete Bezugszeichen:

- 1: Gaskochstelle
- 2: Kochmuldenwanne
- 3: Auflageflansch
- 4: Boden
- 5: Rückwand
- 6: Vorderwand
- 7: Seitenwand
- 8: Seitenwand
- 9: Gasbrenner
- 10: Gasbrenner
- 11: Gasbrenner
- 12: Gasbrenner
- 13: Hauptgasleitung
- 14: Gasventil
- 15: Gasventil
- 16: Gasventil
- 17: Gasventil
- 18: Betätigungsschaft
- 19: Gasleitung
- 20: Gasleitung
- 21: Gasleitung
- 22: Gasleitung
- 23: Haushaltsgeräte-Bedienanordnung
- 24: Bedienknauf
- 25: Befestigungselement
- 26: Abflachung
- 27: Betätigungsabschnitt
- 28: Basisabschnitt
- 29: Rasthaken
- 30: Aufnahmeabschnitt
- 31: Zwischenring
- 32: Dichtelement
- 33: Grundkörper
- 34: Betätigungsabschnitt
- 35: Betätigungsabschnitt
- 36: Rippe
- 37: Rippe
- 38: Durchbruch
- 39: Positioniernut
- 40: Positionierelement
- 41: Aufnahmebereich
- 42: Aufnahmebereich
- 43: Zahn
- 44: Zahn
- 45: Zahn
- 46: Bohrung

- F_{Ab}: Abzugskraft
- F_{Auf}: Aufdrückkraft
- A: Axialrichtung

## Patentansprüche

1. Haushaltsgeräte-Bedienanordnung (23) mit einem Betätigungsschaft (18), einem verdrehfest an dem Betätigungsschaft (18) angeordneten Bedienknauf (24), der ein Befestigungselement (25) zum Befestigen des Bedienknaufs (24) an dem Betätigungsschaft (18) aufweist, wobei das Befestigungselement (25) dazu eingerichtet ist, eine reibschlüssige Verbindung mit dem Betätigungsschaft (18) herzustellen, so dass eine Aufdrückkraft (F_{Auf}) beim Aufdrücken des Bedienknaufs (24) auf den Betätigungsschaft (18) in Axialrichtung (A) desselben geringer als eine Abzugskraft (F_{Ab}) beim Abziehen des Bedienknaufs (24) von dem Betätigungsschaft (18) entgegen der Axialrichtung (A) desselben ist, **dadurch gekennzeichnet, dass** das Befestigungselement (25) kammförmig ist und Zähne (43 - 45) aufweist, die in Richtung auf eine seitliche Abflachung (26) des Betätigungsschafts (18) hin orientiert sind, um das Befestigungselement (25) an der seitlichen Abflachung (26) zu verhaken, und dass in dem Befestigungselement (25) eine seitliche Bohrung (46) vorgesehen ist, in die zum Demontieren des Bedienknaufs (24) ein Werkzeug einführbar ist, um das Befestigungselement (25) von der seitlichen Abflachung (26) wegzudrücken, wodurch der Bedienknauf (24) von dem Betätigungsschaft (18) abziehbar ist.

2. Haushaltsgeräte-Bedienanordnung nach Anspruch 1, **dadurch gekennzeichnet, dass** der Bedienknauf (24) aus einem Kunststoffmaterial gefertigt ist.

3. Haushaltsgeräte-Bedienanordnung nach Anspruch 1 oder 2, **dadurch gekennzeichnet, dass** der Bedienknauf (24) und das Befestigungselement (25) einstückig sind.

4. Haushaltsgeräte-Bedienanordnung nach Anspruch 1 oder 2, **dadurch gekennzeichnet, dass** der Bedienknauf (24) und das Befestigungselement (25) getrennte Bauteile sind.

5. Haushaltsgeräte-Bedienanordnung nach Anspruch 4, **dadurch gekennzeichnet, dass** das Befestigungselement (25) aus einem Metallwerkstoff gefertigt ist.

6. Gasventil (14 - 17) mit einer Haushaltsgeräte-Bedienanordnung (23) nach einem der Ansprüche 1 - 5.

7. Gaskochstelle (1) mit einer Haushaltsgeräte-Bedienanordnung (23) nach einem der Ansprüche 1 - 5 und/oder einem Gasventil (14 -17) nach Anspruch 6.

## Claims

1. Household device control assembly (23) with an actuation shaft (18), a control knob (24) arranged in a rotationally fixed manner on the actuation shaft (18), which has a fastening element (25) for fastening the control knob (24) to the actuation shaft (18), wherein the fastening element (25) is designed to establish a frictionally-engaged connection with the actuation shaft (18), so that when the control knob (24) is pressed onto the actuation shaft (18) in the axial direction (A) of the same, a pressing force (*Fₒₙ*) is less than a pull-off force (*F_{off}*) when the control knob (24) is pulled off from the actuation shaft (18) against the axial direction (A) of the same, **characterised in that** the fastening element (25) is comb-shaped and has teeth (43-45) which are oriented toward a lateral flattening (26) of the actuation shaft (18) in order to hook the fastening element (25) on the lateral flattening (26) and that a lateral borehole (46) is provided in the fastening element (25), into which a tool can be inserted for the purpose of dismounting the control knob (24), in order to press the fastening element (25) away from the lateral flattening (26), as a result of which the control button (24) can be pulled off from the actuation shaft (18).

2. Household device control assembly according to claim 1, **characterised in that** the control knob (24) is produced from a plastic material.

3. Household device control assembly according to claim 1 or 2, **characterised in that** the control knob (24) and the fastening element (25) are in one piece.

4. Household device control assembly according to claim 1 or 2, **characterised in that** the control knob (24) and the fastening element (25) are separate components.

5. Household device control assembly according to claim 4, **characterised in that** the fastening element (25) is produced from a metallic material.

6. Gas valve (14-17) with a household appliance control assembly (23) according to one of claims 1 to 5.

7. Gas cooker (1) with a household appliance control assembly (23) according to one of claims 1 - 5 and/or a gas valve (14-17) according to claim 6.

## Revendications

1. Configuration de commande pour appareils électroménagers (23) avec un arbre d'actionnement (18), un bouton de commande (24) disposé de manière fixe en rotation au niveau de l'arbre d'actionnement (18), lequel bouton de commande présente un élément de fixation (25) destiné à fixer le bouton de commande (24) à l'arbre d'actionnement (18), dans lequel l'élément de fixation (25) est conçu pour produire une liaison par frottement avec l'arbre d'actionnement (18), de sorte qu'une force d'appui (F_{auf}) lorsque le bouton de commande (24) est engagé par pression sur l'arbre d'actionnement (18) dans la direction axiale (A) de celui-ci est plus faible qu'une force de détachement (F_{ab}) lorsque le bouton de commande (24) est désengagé de l'arbre d'actionnement (18) à l'opposé de la direction axiale (A) de celui-ci, **caractérisée en ce que** l'élément de fixation (25) est en forme de peigne et présente des dents (43-45) qui sont orientées dans la direction d'une partie plate (26) de l'arbre d'actionnement (18) pour accrocher l'élément de fixation (25) à la partie plate latérale (26), et **en ce que** dans l'élément de fixation (25) est prévu un alésage latéral (46) dans lequel un outil peut être inséré en vue de démonter le bouton de commande (24) pour repousser l'élément de fixation (25) de la partie plate latérale (26), moyennant quoi le bouton de commande (24) peut être retiré de l'arbre d'actionnement (18).

2. Configuration de commande pour appareils électroménagers selon la revendication 1, **caractérisée en ce que** le bouton de commande (24) est fabriqué à partir d'un matériau en matière plastique.

3. Configuration de commande pour appareils électroménagers selon la revendication 1 ou 2, **caractérisée en ce que** le bouton de commande (24) et l'élément de fixation (25) sont d'un seul tenant.

4. Configuration de commande pour appareils électroménagers selon la revendication 1 ou 2, **caractérisée en ce que** le bouton de commande (24) et l'élément de fixation (25) sont des éléments séparés.

5. Configuration de commande pour appareils électroménagers selon la revendication 4, **caractérisée en ce que** l'élément de fixation (25) est fabriqué à partir d'un matériau métallique.

6. Vanne de gaz (14-17) avec une configuration de commande pour appareils électroménagers (23) selon l'une des revendications 1-5.

7. Poste de cuisson à gaz (1) avec une configuration de commande pour appareils électroménagers (23) selon l'une des revendications 1-5 et/ou une vanne de gaz (14-17) selon la revendication 6.
